# EUROPÄISCHE PATENTANMELDUNG

(11) **EP 0 735 162 A2**
(43) Veröffentlichungstag der Anmeldung: **02.10.1996**
(21) Anmeldenummer: 96108182.5
(22) Anmeldetag: 17.04.1990
(51) Int. Cl.: D01C 1/00, C04B 18/28

(54) **Verstärkungs- und/oder Prozessfasern auf Basis von Pflanzenfasern, Verfahren zu ihrer Herstellung und ihre Verwendung**

(30) Priorität: 17.04.1989 DE 3912615; 26.03.1990 DE 4009662
(62) Teilanmeldung aus: 90906168.1
(71) Anmelder: ECCO Gleittechnik GmbH, D-82402 Seeshaupt (DE)
(72) Erfinder: Spehner, Jean Léon, F-67100 Strasbourg (FR)
(74) Vertreter: Kinzebach, Werner, Dr.

(57) **Zusammenfassung**

Die Erfindung betrifft Verstärkungs- und/oder Prozessfasern auf Basis von Pflanzenfasern, dadurch erhältlich, daß man von Holzbestandteilen befreite Pflanzenfasern mit einer wäßrigen Lösung mindestens einer Metallverbindung, ausgewählt unter Metalloxiden -hydroxiden, -carbonaten, -sulfaten, -thiosulfaten, -sulfiten, -silikaten oder -phosphaten behandelt, anschließend wäscht und mit einem anorganischen oder organischen Bindemittel behandelt oder die nicht-gewaschenen Fasern mit einer Mineralsäure neutralisiert, oder
daß man von Holzbestandteilen befreite Pflanzenfasern mit einem Oxidationsmittel behandelt oder
daß man nicht-vorbehandelte Pflanzenfasern bei 250 bis 350 °C unter kontrollierter Luftzufuhr behandelt, so daß eine Verkohlung der Fasern erfolgt.

## Beschreibung

Die Erfindung betrifft Verstärkungs- und/oder Prozessfasern auf Basis von Pflanzenfasern, Verfahren zu ihrer Herstellung und ihre Verwendung.

Es ist bekannt, daß Formteilen häufig Asbestfasern beigemischt werden. In der letzten Zeit hat sich aber herausgestellt, daß Asbest vom gesundheitlichen Standpunkt keineswegs unbedenklich ist. Trotz dieses Nachteils kommen diese Fasern nach wie vor in großem Umfang zur Anwendung, weil sie auf vielen Anwendungsgebieten große Vorteile besitzen und echte Alternativen am Markt zur Zeit nicht vorhanden sind.

Das gleiche gilt für Glasfasern. Auch Kunstfasern sind nicht unbedenklich, da bei höheren Temperaturen Zersetzungsreaktionen unter Bildung von toxischen Dämpfen stattfinden können.

Auch auf der Basis von Pflanzenfasern wurde bereits versucht, ein Ersatzmaterial für Asbest zu finden. So beschreibt DE-OS 30 08 204 ein Verfahren zur Herstellung einer Armierungsfaser, bei dem Pflanzenfasern zunächst bezüglich der Kapillaren geöffnet werden und die so behandelten Plfanzenfasern dann mit einer Aufschlämmung von Kalk und Wasser und nach einer Zwischentrocknung mit einer Formaldehyd enthaltenden Wasserglaslösung imprägniert werden. Diese Behandlungsschritte können auch in umgekehrter Reihenfolge ausgeführt werden. Auch dieses Verfahren hat jedoch nicht zu dem gewünschten Erfolg geführt.

Der Erfindung liegt daher die Aufgabe zugrunde, Verstärkungs- und Prozessfasern zur Verfügung zu stellen, die die vorteilhaften Eigenschaften der Asbestfaser besitzen, ohne deren gesundheitsschädlichen Nachteile aufzuweisen.

Diese Aufgabe wird gelöst durch Verstärkungs- und Prozessfasern auf Basis von Pflanzenfasern, die durch das nachstehende Verfahren erhältlich sind.

Das Verfahren zur Herstellung der erfindungsgemäßen Verstärkungs- und Prozessfasern ist dadurch gekennzeichnet, daß man
a) die faserhaltigen Teile von Faserpflanzen von Holzbestandteilen und anderen unerwünschten Bestandteilen der Pflanze befreit,
b) die von Holzbestandteilen befreiten Pflanzenfasern gewünschtenfalls mit einer wäßrigen Lösung mindestens einer Metallverbindung, ausgewählt unter Metalloxiden, Metallhydroxiden, Metallcarbonaten, Metallsulfaten, Metallthiosulfaten, Metallsulfiten, Metallsilikaten oder Metallphosphaten behandelt, anschliessend wäscht und mit einem anorganischen oder organischen Bindemittel behandelt oder die nicht-gewaschenen Fasern mit einer Mineralsäure neutralisiert, oder
c) die von Holzbestandteilen befreiten Pflanzenfasern gewünschtenfalls mit einem Oxidationsmittel behandelt, oder
d) die rohen, nichtvorbehandelten Pflanzenfasern bei 250 bis 350 °C unter kontrollierter Luftzufuhr behandelt, so daß eine Verkohlung der Fasern erfolgt.

Für die Herstellung der erfindungsgemäßen Armierungs- und Prozessfasern sind Fasern von allen Faserpflanzen geeignet. Bevorzugt verwendet man Bastfasern, wie die Stengelfasern von Flachs, Hanf, Jute, Nesselpflanzen, die Blattfasern der Agaven, die Samenhaare beispielsweise der Baumwolle und die Fasern der Fruchtschale von Kokos. Brauchbar sind auch Fasern, die aus Gräsern erhältlich sind, insbesondere aus Elefantengras, das einen Faseranteil von ca. 50 % besitzt.

Die Pflanzenfasern in geschnittener oder ungeschnittener Form müssen zuerst von Holzbestandteilen und anderen unerwünschten Pflanzenbestandteilen befreit werden. Dies erfolgt anhand bekannter und üblicher Verfahren, beispielsweise durch Rösten und Entholzen von Grünflachs.

Gemäß einer bevorzugten Ausführungsform erfolgt die Entfernung der Holzbestandteile durch Aufschluß der Pflanzenfasern mit einer Ultraschallbehandlung in wäßrigem Medium. Die Ultraschallwellenlänge ist nicht kritisch. Sie wird je nach Apparatur vorzugsweise so gewählt, daß optimale Schallintensität erreicht wird und Ultraschallkavitation eintritt.

Als wäßriges Medium verwendet man vorzugsweise ein Gemisch aus Wasser mit mindestens einem polaren organischen Lösungsmittel. Als organisches Lösungsmittel verwendet man vorzugsweise einen C₁ bis C₄-Mono- oder Dialkohol, ein C₁ bis C₄-Keton, einen mit Wasser mischbaren Äther oder ein Gemisch davon. Besonders bevorzugt sind Methanol, Ethanol und Aceton. Das Volumenverhältnis von Wasser zu organischem Lösungsmittel liegt vorzugsweise im Bereich von 5:1 bis 1:5, insbesondere 3:1 bis 1:3.

Das Ultraschallverfahren ist eine besonders rasche, einfache und schonende Methode zur Entfernung der Holzbestandteile und anderer unerwünschter Bestandteile der rohen Pflanzenfasern. Die auf diese Weise erhaltenen Pflanzenfasern sind mechanisch nicht beschädigt und sie besitzen die Zerreißfestigkeit der ursprünglichen Faser. Da auch die anderen unerwünschten Pflanzenbestandteile, insbesondere das Bindemittel, weitgehend durch die Ultraschallbehandlung entfernt werden, sind die Fasern mit anderen Materialien gut verträglich, so daß sie leicht in eine Matrix aufgenommen werden können. Die nach Ultraschallbehandlung erhaltenen Pflanzenfasern sind daher auch ohne eine weitere Nachbehandlung für die nachfolgend noch genannten Anwendungsgebiete geeignet.

Gewünschtenfalls können die von Holzbestandteilen befreiten Fasern anschließend mit der wäßrigen Lösung einer Metallverbindung behandelt werden. Diese Lösung enthält insbesondere 1 bis 30 Gew.-%, besonders bevorzugt 10 bis 30 Gew.-% der Metallverbindung, bezogen auf das Gesamtgewicht der Lösung. Vorzugsweise erfolgt die Behandlung bei 50 bis 100 °C.

Falls erforderlich, werden die Fasern dann mit Wasser gewaschen und gegebenenfalls getrocknet und mit dem Bindemittel behandelt oder sie werden mit einer Mineralsäure, insbesondere Salzsäure, Phosphorsäure oder Schwefelsäure, neutralisiert, gegebenenfalls getrocknet und mit dem Bindemittel behandelt.

Bevorzugte Metallverbindungen sind Alkali- oder Erdalkalioxide, -hydroxide, -carbonate, -thiosulfate oder -sulfate sowie basische Eisen-, Titan-, Antimon- oder Aluminiumsalze. Besonders bevorzugt sind Alkali- oder Erdalkalihydroxide, Alkalimetasilikate und Alkalithiosulfate, z.B. Natrium- oder Kaliumhydroxid, Natriumetasilikat und Natriumthiosulfat.

Als Bindemittel verwendet man insbesondere Zement, Gips, Silikate, Alkali- oder Erdalkalisalze von Mineralsäuren, Bitumen, Asphalt, natürliche und synthetische Elastomere, Polyurethane, Phenolharze, Resole, Melaminharze, Epoxyharze oder deren Gemische.

Die Anwendung dieser Bindemittel kann in wäßrigem oder organischem Medium (Lösungsmittel) erfolgen. Die Bindemittelmenge beträgt vorzugsweise 5 bis 20 Gew.-%, bezogen auf den Faseranteil.

Die Fasern werden mit einer wäßrigen oder organischen Lösung oder Suspension des Bindemittels imprägniert, indem sie beispielsweise in die Lösung oder Suspension getaucht oder damit besprüht werden. Die Imprägnierung erfolgt vorzugsweise bei Raumtemperatur, anschließend wird getrocknet.

Anstelle der in der oben beschriebenen Weise erhaltenen Fasern kann man auch die bei der Flachsbearbeitung anfallenden Faserkomponenten direkt mit dem Bindemittel behandeln.

Je nach Anwendungszweck der erfindungsgemäßen Fasern kann man noch zusätzliche Behandlungsstufen vorsehen. Wenn beispielsweise eine helle Faser gewünscht ist, kann man nach der Vorbehandlung der Fasern einen Bleichvorgang einschieben. Zu diesem Zweck werden die Fasern in üblicher Weise bei Raumptemperatur oder bei erhöhter Temperatur mit einer Peroxid- oder Hypochloritlösung oder mit Chlorwasser behandelt und anschließend mit Wasser gespült.

Falls ein tribologischer Effekt gewünscht ist, kann man ihnen ein Feststoffschmiermittel zusetzen. Geeignete Feststoffschmiermittel sind beispielsweise Molybdändisulfid, Graphit, Zinksulfit, Tricalciumphosphat, Titanoxid und dergleichen.

Falls eine zusätzliche flammhemmende Ausrüstung gewünscht ist, kann man ihnen eine flammhemmende Verbindung zusetzen, wie ein Antimonoxid, Eisensulfat, Alaun, Wismutoxid, Harnstoffphosphat oder Chlorparaffin.

Als Konservierungsmittel kann ihnen auch ein Bakterizid, wie ein Schwermetallsalz oder eine Chlorphenolverbindung, zugesetzt werden.

Die erfindungsgemäßen Fasern, insbesondere die nach Ultraschallbehandlung erhaltenen Fasern können auch hydophobiert werden, zum Beispiel mit einem Fluorcopolymer, Paraffin, Polysiloxan, reaktiven Hydrophobierungsmittel (Silane, Isocyanate) oder Zirkon- oder Zinksalz.

Wie oben bereits erwähnt, können in einer weiteren Variante des erfindungsgemäßen Verfahrens Pflanzenfasern, die die organischen Bestandteile (Holzbestandteile, Zuckerstoffe, Pektine) noch enthalten, pyrolysiert werden. Sie werden dabei einer Behandlung bei einer Temperatur von 250 bis 350 °C unter kontrollierter Luftzufuhr unterworfen. Dabei verbrennen die Pflanzen nicht, sondern sie verkohlen. Beispielsweise werden die Fasern unter kräftiger Durchmischung in einem von außen beheizten Röhrenofen erhitzt. Dabei werden die gebildeten Gase abgesaugt und der Luftzutritt so geregelt, daß keine Verbrennung und eine Druckerniedrigung von etwa 0,1 bis 0,05 Bar erfolgt. Alternativ dazu kann man Inertgase, wie Kohlendioxid, Stickstoff, Stickstoff/Wasserstoff etc. zuspeisen, um den Sauerstoffgehalt zu erniedrigen. Man kann auch unter im wesentlichen reiner Inertgasatmosphäre arbeiten.

Die Erhitzungszeit wird so gewählt, daß der Carbonisierungsgrad etwa 20 bis 80 %, insbesondere 20 bis 60 %, beträgt. Überraschenderweise erhält man auf diese Weise ohne eine Vorbehandlung eine Faser, die auf bestimmten Anwendungsgebieten umweltschädliche Fasern ersetzen kann.

Die durch Pyrolyse erhaltene Faser ist relativ brüchig und kann sehr leicht zerkleinert werden, so daß die Faser als Mikrofaser vorliegt. Dies kann anhand der spezifischen Oberfläche (nach Blaine-Dyckerhoff) und der Dichte gezeigt werden:

| | Spezif. Oberfläche (cm²/g) | Dichte g/cm³ |
|---|---|---|
| erfindungsgemäß pyrolysierte Faser (aus Flachs erhalten) | 6100 | 1,58 |
| Asbest | 9900 | 2,5 |
| Flachsfaser (unbehandelt, geschnitten) | 2000 | 1,47 |

Gewünschtenfalls können die durch Pyrolyse erhaltenen Fasern noch imprägniert werden, indem man sie in eine Lösung aus einem Harz, synthetischen oder natürlichen Gummi oder Elastomer taucht oder mit dieser Lösung besprüht. Diese Imprägnierung dient dazu, die Benetzung und Verarbeitung der Faser zu erleichtern.

Gemäß einer weiteren Ausführungsform des erfindungsgemäßen Verfahrens werden die Pflanzenfasern einer chemischen Oxidation unterworfen. Zu diesem Zweck behandelt man Pflanzenfasern, die von Holzbestandteilen befreit und zweckmäßigerweise auf ca. 3 bis 10 mm Länge geschnitten sind, mit einer wäßrigen Lösung eines Oxidationsmittels. Als Oxidationsmittel sind insbesondere Alkalimetallperiodate, Alkalimetallpersulfate, vorzugsweise Alkalimetallpermanganate und insbesondere Kaliumpermanganat geeignet.

Die Fasern werden mit der Oxidationslösung benetzt, beispielsweise durch Aufsprühen, Imprägnieren und dergleichen. Die Behandlung erfolgt bei einer Temperatur von etwa 60 °C bis zum Siedepunkt der Lösung, vorzugsweise bei etwa 80 bis 95 °C und insbesondere bei 85 bis 95 °C.

Nach der Oxidation, die im allgemeinen nach einigen Minuten beendet ist, werden die Fasern gewaschen und getrocknet. Das Trocknen erfolgt bei einer Temperatur bis maximal 140 °C.

Die oxidierten Fasern sind schwer entzündlich und besitzen vorteilhafte tribologische Eigenschaften.

Es können auch Garne oxidiert werden. Dabei muß der Oxidationsprozeß so gesteuert werden, daß das Garn nicht zerstört wird. Dies erfolgt über die Konzentration der Oxidationslösung und die Kontaktzeit mit der Oxidationslösung sowie durch eine nachfolgende Reduktion der behandelten Fasern mit einem üblichen Reduktionsmittel, z.B. Natriumsulfit.

Im folgenden werden Anwendungsgebiete für die erfindungsgemäßen Fasern erläutert:

In der Zementfaserindustrie sind die erfindungsgemäßen "mineralisierten" Fasern für die Herstellung von beispielsweise Zementplatten und Zementformteilen brauchbar. Für diesen Zweck werden die Fasern wie oben beschrieben behandelt, auf eine Länge von beispielsweise 4 bis 8 mm zugeschnitten und mit einer Metallverbindung wie oben beschrieben behandelt. Die Einarbeitung der Fasern in den Zement erfolgt auf übliche Weise, beispielsweise durch Zumischen zum Zement oder zu der angemachten Betonmischung.

Auf gleiche Weise können Gipsplatten und Gipsformteile hergestellt werden. Die Anwendung mineralisierter Pflanzenfasern ist hier nicht zwingend, weil die Mineralisierung bei der Anwendung der Pflanzenfasern im Gipsbrei erfolgen kann. Die Länge der Fasern richtet sich nach der gewünschten mechanischen Festigkeit der Gipsteile.

Für die Herstellung von Gips für medizinische Zwecke werden die Fasern zusätzlich, wie oben beschrieben, gebleicht, was gleichzeitig eine Entkeimung bewirkt.

Für die Herstellung von Verputz- und Spachtelmassen auf Basis von Gips und Leim oder wasserlöslichen Harzen setzt man die vorbehandelten Fasern zusammen mit einem üblichen Konservierungsmittel ein. Auch in diesem Fall ist die gewünschte Festigkeit maßgebend für die Länge der zur Anwendung kommenden Fasern.

Die erfindungsgemäßen Fasern sind auch zur Herstellung von Schalldämmstoffen, wie Maschinenverkleidungen und Massen für den Unterbodenschutz von Fahrzeugen und zur Verwendung in Dichtmassen, Dachbahnen und Straßenbelägen geeignet. Zu diesem Zweck werden sie beispielsweise mit Bitumen-Gummimehl, Asphalt und Epoxyharzen vermischt. Die Länge der Fasern richtet sich nach der Auftragungsmethode. Bei aufzusprühenden Überzügen sollte die Länge der Fasern 10 mm nicht überschreiten, wohingegen die Länge der Fasern bei aufgespachtelten Überzügen 20 bis 50 mm betragen kann.

Die erfindungsgemäßen Fasern sind besonders geeignet, als Zusatz zu Phenoplasten oder thermoplastischen Kunststoffen, insbesondere bei der Herstellung von Kunststoff-Formteilen.

Die pyrolysierten und die oxidierten Fasern sind besonders vorteilhaft für Dämmstoffe und Reibbeläge, die aus einem Agglomerat mehrerer Komponenten bestehen und unter Anwendung von Druck und Temperatur verpreßt werden. Die erfindungsgemäßen Fasern dienen dabei dazu, eine optimale Verteilung und homogene Mischung der zahlreichen Einzelbestandteile, die eine sehr unterschiedliche Dichte aufweisen können, zu gewährleisten. Die pyrolysierten und oxidierten Fasern lassen sich auch zur Verbesserung der Fließfähigkeit von Zement, Kunststoffen etc. verwenden. Auf Grund ihrer tribologischen Eigenschaften können sie auch für die Herstellung von technischen Papieren eingesetzt werden.

Die erfindungsgemäßen Fasern (einschließlich der oxidierten Fasern) können auch in Form von Garnen oder Geweben in Phenoplasten oder thermoplastischen Kunststoffen verwendet werden, welche zu Gleit- und Verschleißteilen und gepreßten Maschinenteilen, wie Bremsbändern, Kupplungen und Reibbelägen, verarbeitet werden. Sie verleihen den Formteilen ausgezeichnete mechanische Eigenschaften, wie Zug-, Reiß- und Biegefestigkeit.

In der Papier- und Pappeindustrie kommen gebleichte oder ungebleichte erfindungsgemäße Fasern zur Anwendung. Für diesen Zweck werden sie vorzugsweise mit einer Harzlösung (Leimung), die aus Harz, Seifen, Wasserglas und Casein besteht, imprägniert. In gleicher Weise lassen sich die erfindungsgemäßen Fasern auch bei der Herstellung von Filz verwenden.

Die erfindungsgemäßen Fasern können auch zur Herstellung von Poliermitteln verwendet werden. Zu diesem Zweck werden Fasern von ca. 2 bis 4 mm Länge mit Wachs oder einer Gummilösung getränkt und anschließend über einen Extruder zu Kügelchen geformt. Als Wachse kann man beispielsweise Bienenwachs, synthetische Hartwachse, Pflanzenwachse, wie Carnaubawachs, Candelilawachs und dergleichen verwenden. Je nach Wachsart liegt das Verhältnis von Wachs zu Faser im Bereich von 3 bis 5 g Wachs pro 1 g Faser. Durch geeignete Wahl des Wachses läßt sich auch die Härte und die thermische Stabilität der Kügelchen beeinflussen.

Als Gummilösung sind Natur- oder Synthesegummi, aufgelöst in einem Lösungsmittel, beispielsweise Methylenchlorid und Kohlenwasserstoffe, wie Xylol, Toluol sowie Latex brauchbar. Latex kann auch in wäßrigem Medium zur Anwendung kommen.

Die mit Wachs oder mit Gummi getränkten Faserkügelchen werden insbesondere als Trommelgut zum Reinigen und Polieren von verschiedenen Materialien (Leder, Holz, Metall) eingesetzt. Sie können auch als Strahlgut beim Strahlreinigen (z.B. Sandstrahlen) Anwendung finden. Die mit Gummi getränkten Faserkügelchen lassen sich vorteilhaft auch in Preßmassen einarbeiten. Sie stauben nicht und haben eine bessere Verankerung in der Matrix in Gegenwart von Harzen oder bei der Armierung von Elastomeren.

### BEISPIELE

### Beispiel 1

Grünflachsfasern wurden durch Rösten und Entholzen von Holzbestandteilen befreit. 100 kg der von Holzbestandteilen befreiten Fasern wurden in einer 5 %igen wäßrigen Natriumhydroxidlösung 30 Minuten bei 60° C gerührt. Die Fasern werden isoliert und durch Besprühen mit 10 %iger Phosphorsäure neutralisiert. Anschließend werden die Fasern in einem Heißluftstrom, z.B. im Wirbelbett, getrocknet.

### Beispiel 2

Man wiederholt das in Beispiel 1 beschriebene Verfahren, wobei man jedoch nach der Behandlung der Fasern mit Natronlauge die Fasern isoliert, mit Wasser wäscht und anschließend mit Zementbrühe besprüht.

### Beispiel 3

100 kg geschnittene Grünflachsfasern werden bei 280 bis 300° C in einem Ofen unter kräftiger Durchmischung erhitzt. Die gebildeten Gase werden abgesaugt und durch Frischluft derart ersetzt, daß keine Verbrennung erfolgt. Das Erhitzen wird so lange durchgeführt, bis der gewünschte Carbonisierungsgrad, z.B. 80 % beträgt.

### Beispiel 4

800 g von Holzbestandteilen befreite Flachsfasern werden mit einer Lösung von 300 g Kaliumpermanganat in 3,5 l Wasser mit einer Temperatur von 90 bis 93 °C imprägniert. Nach 3 bis 4 Minuten erfolgt eine Schaumbildung, der Oxidationsprozeß ist dann beendet. Anschließend zieht man das Oxidationsmittel ab und wäscht die Flachsfasern mehrmals mit Wasser. Nach dem Waschen werden die Fasern bei ca. 110 bis 120 °C getrocknet.

Die oxidierten Fasern haben eine Dichte von 3,5 g/cm³ und eine spezifische Oberfläche nach Blain Dyckerhoff von 8600 cm²/g.

Längenverteilung der oxidierten Fasern:
80 % zwischen 10 und 500 µm
5 % zwischen 1 und 2 mm
12,5 % zwischen 2 und 3 mm
2,5 % >3mm.

Dickeverteilung der oxidierten Fasern:
20 % zwischen 5 und 8 µm
25 % zwischen 10 und 16 µm
17,5 % zwischen 30 und 32 µm
25 % >40 µm (zwischen 50 und 500 µm).

### Beispiel 5

Rohflachsstengel, die nur oberflächlich entholzt waren, werden auf 10 cm Länge geschnitten und in ein Gemisch von 50 % Wasser und 50 % Ethanol (V/V) eingetaucht und bei Raumtemperatur mit Ultraschall behandelt. Der Ultraschallgenerator wurde auf 700 kHz bei einer Leistung von 50 Watt cm/² über eine piezoelektrische Anordnung eingestellt. Der Aufschluß war nach 10 Minuten beendet und die Bad-Temperatur erhöhte sich um 30 °C. Die Fasern wurden anschließend isoliert und in einem Heißluftstrom getrocknet.

## Patentansprüche

1. Verstärkungs- und/oder Prozessfasern auf Basis von Pflanzenfasern, dadurch erhältlich, daß man von Holzbestandteilen befreite Pflanzenfasern mit einer wäßrigen Lösung mindestens einer Metallverbindung, ausgewählt unter Metalloxiden, -hydroxiden, -carbonaten, - sulfaten, -thiosulfaten, -sulfiten, -silikaten oder -phosphaten behandelt, anschließend wäscht und mit einem anorganischen oder organischen Bindemittel behandelt oder die nicht-gewaschenen Fasern mit einer Mineralsäure neutralisiert oder
daß man von Holzbestandteilen befreite Pflanzenfasern direkt mit einem Bindemittel behandelt.

2. Fasern nach Anspruch 1, dadurch erhältlich,
daß man Flachs-, Jute-, Nessel-, Hanf-, Baumwolle- oder Sisalfasern verwendet.

3. Fasern nach Anspruch 1 oder 2, dadurch erhältlich, daß man als Metallverbindung Alkali- oder Erdalkalioxide, -hydroxide, -carbonate, -thiosulfate oder -sulfate sowie basische Eisen-, Titan-, Antimon- oder Aluminiumsalze verwendet.

4. Fasern nach Anspruch 3, dadurch erhältlich,
daß man als Metallverbindung Natrium- oder Kaliumhydroxid, Natriummetasilikat oder Natriumthiosulfat verwendet.

5. Fasern nach einem der vorhergehenden Ansprüche, dadurch erhältlich, daß man die Pflanzenfasern mit einer 1 bis 30 Gew.-%igen, vorzugsweise 10 bis 30 Gew.-%igen, wäßrigen Lösung der Metallverbindung behandelt.

6. Fasern nach einem der vorhergehenden Ansprüche,
dadurch erhältlich, daß man die Pflanzenfasern mit der wäßrigen Lösung der Metallverbindung bei 50 bis 100°C behandelt.

7. Fasern nach einem der vorhergehenden Ansprüche, dadurch erhältlich, daß man als Bindemittel Zement, Gips, Silikate, Bitumen, Asphalt, natürliche oder synthetische Elastomere, Polyurethane, Phenolharze, Resole, Melaminharze, Epoxyharze oder Gemische davon verwendet.

8. Fasern nach einem der vorhergehenden Ansprüche,
dadurch erhältlich, daß man 5 bis 20 Gew.-% Bindemittel, bezogen auf den Faseranteil, verwendet.

9. Fasern nach einem der vorhergehenden Ansprüche, dadurch erhältlich, daß man die von Holzbestandteilen befreiten Pflanzenfasern vor der Behandlung mit der wäßrigen Lösung der Metallverbindung durch Behandlung mit Peroxiden, Hypochlorit oder Chlorwasser bleicht.

10. Fasern nach Anspruch 1 oder 2, dadurch erhältlich, daß man als Oxidationsmittel ein Alkalimetallperjodat, ein Alkalimetallpersulfat oder Alkalimetallpermanganat verwendet.

11. Fasern nach Anspruch 10, dadurch erhältlich, daß man als Oxidationsmittel Kaliumpermanganat verwendet.

12. Fasern nach Anspruch 10 oder 11, dadurch erhältlich, daß man die Oxidation bei einer Temperatur von 75 bis 95°C durchführt.

13. Fasern nach einem der vorhergehenden Ansprüche, dadurch gekennzeichnet, daß sie zusätzlich mit einem Mittel zur Flammfestausrüstung, einem Feststoffschmiermittel und/oder einem Konservierungsmittel ausgerüstet sind.

14. Verfahren zur Herstellung von Verstärkungs- und/oder Prozessfasern auf Basis von Pflanzenfasern,
dadurch gekennzeichnet, daß man
a) die faserhaltigen Teile von Faserpflanzen von Holzbestandteilen und anderen unerwünschten Bestandteilen der Pflanze befreit, und
b) die von Holzbestandteilen befreiten Pflanzenfasern gewünschtenfalls mit einer wäßrigen Lösung mindestens einer Metallverbindung, ausgewählt unter Metalloxiden, Metallhydroxiden, Metallcarbonaten, Metallsulfaten, Metallthiosulfaten, Metallsulfiten, Metallsilikaten oder Metallphosphaten behandelt, anschließend wäscht und mit einem anorganischen oder organischen Bindemittel behandelt oder die nichtgewaschenen Fasern mit einer Mineralsäure neutralisiert.

15. Verfahren nach Anspruch 14, dadurch gekennzeichnet, daß man das Verfahren gemäß Punkt a) durchführt, indem man die faserhaltigen Pflanzenteile einer Ultraschallbehandlung in wäßrigem Medium unterwirft.

16. Verfahren nach Anspruch 15, dadurch gekennzeichnet, daß die Ultraschallbehandlung in einem Gemisch aus Wasser und einem polaren organischen Lösungsmittel erfolgt.

17. Verfahren nach Anspruch 16, dadurch gekennzeichnet, daß man als organisches Lösungsmittel einen C₁ bis C₄-Mono- oder Dialkohol, ein C₁ bis C₄-Keton oder einen mit Wasser mischbaren Äther verwendet.

18. Verfahren nach Anspruch 17, dadurch gekennzeichnet, daß man als organisches Lösungsmittel Methanol, Ethanol oder Aceton verwendet.

19. Verwendung der Fasern nach einem der Ansprüche 1 bis 13 für die Herstellung von Formteilen.

20. Verwendung der Fasern nach einem der Ansprüche 1 bis 13 für die Herstellung von Zement-, Kunststoff- und Gipsformteilen, Schalldämmstoffen, Reibbelägen, sowie in Dichtmassen, Dachbahnen, Straßenbelägen, Poliermitteln und als Füllstoff.
